(19) Europäisches Patentamt / European Patent Office / Office européen des brevets

(11) **EP 2 850 763 B1**

(12) **EUROPEAN PATENT SPECIFICATION**

(45) Date of publication and mention of the grant of the patent:
**13.09.2017 Bulletin 2017/37**

(21) Application number: **13724776.3**

(22) Date of filing: **13.05.2013**

(51) Int Cl.:
*H04B 7/02* (2017.01)   *H04B 7/04* (2017.01)
*H04L 1/00* (2006.01)   *H04L 5/00* (2006.01)
*H04W 72/04* (2009.01)   *H04B 7/06* (2006.01)
*H04B 7/024* (2017.01)   *H04B 7/0417* (2017.01)

(86) International application number:
**PCT/EP2013/059797**

(87) International publication number:
**WO 2013/171152 (21.11.2013 Gazette 2013/47)**

(54) **A METHOD AND A SYSTEM FOR CSI REPORTING IN LTE NETWORKS ACCORDING TO THE MOBILITY OF THE USER EQUIPMENT**

VERFAHREN UND SYSTEM ZUR CSI-BERICHTERSTATTUNG IN LTE-NETZWERKEN JE NACH MOBILITÄT DER BENUTZERVORRICHTUNG

PROCÉDÉ ET SYSTÈME POUR LA REMISE DE COMPTES RENDUS DE CSI DANS DES RÉSEAUX LTE EN FONCTION DE LA MOBILITÉ D'UN ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2012 ES 201230750**

(43) Date of publication of application:
**25.03.2015 Bulletin 2015/13**

(73) Proprietor: **Telefonica S.A.**
**28013 Madrid (ES)**

(72) Inventor: **LORCA HERNANDO, Javier**
**E-28013 Madrid (ES)**

(74) Representative: **Carlos Hernando, Borja**
**Garrigues IP, S.L.P.**
**Hermosilla, 3**
**28001 Madrid (ES)**

(56) References cited:
**US-A1- 2009 040 998    US-A1- 2011 034 171**

- **"Principles of CQI report", 3GPP DRAFT; R2-0601021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20060323, 23 March 2006 (2006-03-23), XP050130758, [retrieved on 2006-03-23]**
- **SAMSUNG: "Remaining Details on PUCCH Reporting Mode", 3GPP DRAFT; R1-105778 REMAINING DETAILS ON PUCCH REPORTING MODE_REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xiâ an, China; 20101011 - 201010, 14 October 2010 (2010-10-14), XP050598809, [retrieved on 2010-10-14]**
- **SHARP: "Consideration on CQI reporting", 3GPP DRAFT; R1-072054, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070502, 2 May 2007 (2007-05-02), XP050105808, [retrieved on 2007-05-02]**

- MOTOROLA: "Remaining details of CSI feedback on PUCCH and PUSCH", 3GPP DRAFT; R1-106277, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489697, [retrieved on 2010-11-09]
- TEXAS INSTRUMENTS: "On proposed enhancements to periodic CSI reporting", 3GPP DRAFT; R1-113241 PROPOSED ENHANCEMENTS TO PERIODIC CSI REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538357, [retrieved on 2011-10-04]
- PANASONIC: "DCT Partitioning for CQI Reporting", 3GPP DRAFT; R1-070933, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 February 2007 (2007-02-06), XP050104943, [retrieved on 2007-02-06]

**Description**

Field of the art

The present invention generally relates to mobile communications and more particularly to a method and a system for CSI reporting in LTE networks.

Prior State of the Art

This present invention is related with the Long Term Evolution (LTE) radio standard, as it is standardized by the 3GPP consortium. Long-Term Evolution (LTE) is the next step in cellular 3G systems, which represents basically an evolution of present mobile communications standards, such as UMTS and GSM [1]. It is a 3GPP standard that provides throughputs up to 50 Mbps in uplink and up to 100 Mbps in downlink. It uses scalable bandwidth from 1.4 to 20 MHz in order to suit the needs of network operators that have different bandwidth allocations. LTE is also expected to improve spectral efficiency in networks, allowing carriers to provide more data and voice services over a given bandwidth.

LTE-Advanced (LTE-A), an evolution of LTE, is being standardized in LTE Release 10 and beyond. It is aimed at fulfilling IMT-Advanced requirements, whose capabilities go beyond those of IMT-2000 and include enhanced peak data rates to support advanced services and applications (100 Mbps for high mobility, and 1 Gbps for low mobility) [5].

Orthogonal Frequency Division Multiple Access (OFDMA) is specified as the downlink multiple access scheme in 3GPP LTE and LTE-A, which divides the available bandwidth into multiple narrow orthogonal frequency bands [2]. Thus, there is no ISI (Inter-Symbol Interference) within the cell boundary. For the uplink, Single-Carrier Frequency Division Multiple Access (SC-FDMA) is defined, which may be considered similar to OFDMA but with an additional Discrete-Fourier Transform (DFT), which spreads the symbols prior to modulation and achieves a lower Peak-to-Average Power Ratio (PAPR), thus improving the efficiency of the power amplifiers. Both OFDMA and SC-FDMA allow the base station (known as eNodeB) to assign different "chunks" of time and frequency to the users in a cell.

Since radio spectrum has long been deemed the most scarce resource, advanced radio resource management (RRM) schemes that can increase the OFDMA network capacity and reduce the deployment costs have been in dire demand. The need for such an RRM algorithm becomes even more acute today, as the number of subscribers continues to experience unprecedented growth globally and the amount of sheer volume of traffic increases incessantly.

One of the advantages of using OFDM in the LTE radio interface is the possibility of supporting frequency selective scheduling (FSS) based on the quality reports provided by the UE (CQIs, Channel Quality Indicators) and the estimations performed by the eNodeB based on the sounding reference signals (SRSs) sent by the UE. This feature allows taking advantage of the multipath propagation conditions that are common in mobile communications. The eNodeB, based on the CQI reported by the UE (for the downlink) and its own channel estimation from the reception of the SRSs (for the uplink), selects the Modulation and Coding Scheme (MCS) to be used and the specific time/frequency resources on the subframe(s) assigned to each UE.

In addition, precoding strategies are envisaged based on other channel state information (CSI) sent by the UEs. LTE Release 8 to 10 adopts the codebook based precoding scheme, in which CSI is derived by the eNodeBs according to a predefined set of precoding matrices (or vectors). The eNodeBs only need the index for the corresponding precoding matrix and this implicit feedback requires very small consumption of the reverse channel resources from the UEs. The drawback is the very limited channel information achievable by this procedure, as the CQI does not give any phase information of the radio channel and only a few precoding matrices are available in order to limit the amount of feedback data.

Other explicit feedback schemes are being investigated for LTE Release 11, by virtue of which more complete channel descriptions are sent back to the eNodeB. Advanced MIMO technologies, such as CoMP (Coordinated Multi-Point Transmission) and multiuser MIMO (MU-MIMO) are being investigated in LTE Release 11, and these techniques require more accurate CSI at the transmitter rather than the implicit feedback to deliver its high performance. Therefore, more efficient and accurate channel reporting mechanisms are still required.

Problems with existing solutions:

LTE proposes two basic ways to forward CSI to the eNodeB:

Aperiodic reporting mode: In this mode, quality information is sent back via PUSCH (namely CQI, PMI and/or RI) in response to a "CQI request" bit in an uplink resource grant sent on the Physical Downlink Control Channel (PDCCH) [2]. Both control information and user's data are multiplexed together and carried by the uplink shared channel. There are some limitations regarding the feedback type (wideband or subband), and a complete frequency-dependent quality report is only possible with a predefined granularity which depends on the system bandwidth [3].

Periodic reporting mode: This mode uses the uplink control channel PUCCH to periodically send quality information. The limited resources associated to this channel impose additional limitations, there being only a maximum of 22 available coded bits for the complete quality report.

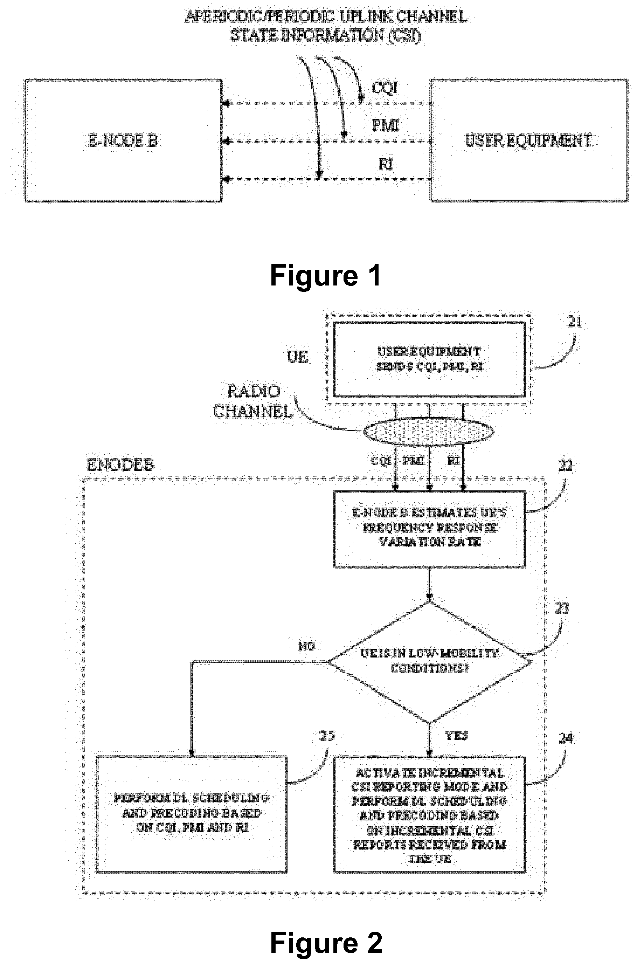

Both reporting modes are based upon the three quantities mentioned above, namely CQI, PMI and RI as depicted in Figure 1. The User Equipment (UE) transmits the three indicators on the uplink in an aperiodic or periodic fashion, making use of the uplink channels PUSCH or PUCCH respectively.

In order to address the stringent conditions imposed by advanced MIMO schemes in LTE Release 11 and beyond, more refined procedures for CSI feedback are required in which the above mentioned limitations do not apply. In particular, accurate phase information of the channel is very important for addressing advanced CoMP solutions.

Moreover, both CQI reporting mechanisms described above represent a waste of resources in situations where the channel coherence bandwidth is high, as is frequently encountered in indoor scenarios or small offices. The reduced delay spread due to the presence of very near obstacles creates a large coherence bandwidth, where the channel frequency response is mainly constant during an important portion of the allocated users' bandwidth. In this situation the different subband CQI values may be highly correlated.

Normal LTE periodic reporting mode involves the PUCCH channel in order to periodically send CQI/PMI/RI reports. PUCCH resources are allocated outside the bandwidth reserved for user data, and the single-carrier nature of uplink modulation precludes its simultaneous use with PUSCH. Hence it is limited to a single (0.5 ms) RB at or near one edge of the system bandwidth, followed (in the second slot of the subframe) by a second RB at or near the opposite edge of the system bandwidth [2]. The two RBs are referred to as a PUCCH region. This approach has several drawbacks:

- As the number of PUCCH regions is limited, control signalling from multiple UEs must be multiplexed using orthogonal code-division multiplexing (CDM), which reduces the probability of correct detection.
- CQI, PMI and RI reports must be time-multiplexed on different subframes in the same PUCCH resources, there being four PUCCH report types according to the payload type [3]. Hence the actual CSI reporting rate is divided by the number of report types.
- Other control information, such as HARQ ACK/NACK and Scheduling Requests (SR), share the same PUCCH resources as CQI, and this increases the coding rate and reduces the probability of detection.
- Simulations carried out by network vendors show that the CQI field in PUCCH has the highest required Es/No for a target error rate [4].

In LTE Releases 8 and 9 it is not possible to transmit simultaneously PUCCH and PUSCH in order to preserve the single-carrier nature of the uplink signal, so if a PUSCH data packet is scheduled in the same subframe as PUCCH it must be dropped in favour of PUCCH. Release 10 supports simultaneous PUSCH and PUCCH transmission, but at the cost of increasing the uplink PAPR. Hence it is desirable to find suitable ways to insert periodic CSI reports onto PUSCH transmissions.

Additionally the possibility of frequency selective scheduling (FSS) makes it very convenient to provide a more accurate scheme for periodic CSI reports, by virtue of which the UEs may benefit from a FSS gain.

Regarding the issue of compressing CSI reports, some solutions have yet been addressed. In US 2009/0274220 a combined solution is proposed using both discrete cosine transform (DCT) and differential modulation (DM) over the subband CQI values. This approach aims to compress the CQI values, but has the drawback of not providing enhanced channel information apart from the usual CQI values (which by themselves do not provide enough accurate information for advanced MIMO or CoMP techniques). In relation to the lack of accurate CSI, it is proposed in US 2010/0008431 the compression of the channel impulse response by using a DCT, also performing a differential pulse code modulation (DPCM) over the quantized values of the coefficients, phases and time delays of the channel taps. This approach has the drawback of performing the described procedure regardless of the user's mobility, e.g. not taking advantage of low-mobility situations in which very similar channel state would sent over large periods of time. In GB 2475098 it is proposed a compression technique comprising singular value decomposition (SVD) of a subset of the channel matrix, selection of strongest right singular vectors and subsequent matrix reduction and quantization. This scheme is quite complex in practice to be done by a UE, and also has the drawback of not providing an adaptive way to encode more or less efficiently according to the user's mobility. In patent US 2008/0207135 several compression techniques of the subband CQI values are proposed, including among others differential CQI compression, difference based wavelet compression, and Hadamard matrices. Again in all the cases emphasis is placed on the compression of the integer CQI values, both in wideband and subband cases, not considering alternative channel quality information which could be more accurate and appropriate for its use in advanced multi-antenna techniques.

'Principles of CQI report' [6] discloses the transmission of wideband CQI report for High speed UE, of Wideband CQI and m Localized Resource Channel CQI for low speed UE, and of no CQI for very high speed terminals. It is also suggested that the CQI report mode change is either triggered by the Terminal or by the EnodeB. 'Consideration on CQI reporting'[7] discloses a scheme to prepare multiple CQI report formats and switching between them based on the speed of the channel profile, providing CQI information for the effective frequency selective scheduling for slow moving UEs, and at the same time, saving uplink resource for the fast moving UEs.

Further, 'On proposed enhancements to periodic CSI reporting' [8] discloses a Rel-10 CA-configured UE that independently reports CSI for each configured DL serving cell. In particular, the UE is configured with separate periodicities and subframe offsets for CSI reporting of each serving cell. In the event of a collision in the same subframe between the CSI reports for different cells, all but one CSI report is dropped according to a priority order based on, first, the PUCCH reporting type and then the lowest serving cell index amongst colliding reports. Focus is put on periodic CSI transmission over PUSCH. Patent application US-A1-2011/034171 provides a communication system and method for single-point transmission and reception and coordinated multi-point transmission and reception are provided. The system and method include determining information associated with a channel status of a target terminal. The system and method also include selecting, with respect to the mobility of the target terminal, one of single-point transmission and reception and coordinated multi-point transmission and reception based on the information associated with the channel status of the target terminal.

Finally, 'DCT partitioning for CQI reporting' [9] discloses a CQI report mechanism for mobile terminals with different channel hypothesis. Especially, it is suggested to switch the CQI reporting scheme according to the velocity of the mobile terminal. Some simulations show that low speed mobile terminals need to use a DCT partition (8-6-1) CQI compression scheme, whereas at higher speed a Best M (5) Average CQI compression scheme seems more efficient. The DCT partition CQI compression mode relies on partitioning the subblocks into strong and weak subblocks, and for each group of subblocks performing DCT greatest CQI compression with different number of transmitted DCT coefficients. However none of the cited documents or patents proposes a periodic reporting of CSI in LTE-Advanced networks especially adequate in low-mobility scenarios, in which two different CSI report are provided by the UE towards the eNodeB. The first report being provided for those TX occasions where a complete CSI channel report must be sent and the second one for those TX occasions where only incremental information is to be sent.

## Summary of the Invention

It is necessary to offer an alternative to the state of the art which covers the gaps found therein, particularly those related to the above mentioned limitations that known proposals have.

To that end, the present invention relates, in a first aspect, to a method for channel state information (CSI) reporting in LTE-Advanced according to independent claim 1.

Corresponding apparatus is defined in independent claim 12.

Preferred embodiments are provided in the dependent claims.

## Brief Description of the Drawings

The previous and other advantages and features will be more fully understood from the following detailed description of several embodiments, which must be considered in a non-limiting manner, and which will be more fully understood with reference to the attached drawings described in the above Prior State of the Art section, in which:

Figure 1 shows the two basic ways to forward CSI to the eNodeB in LTE.
Figure 2 shows the flow diagram proposed in the present invention for the direction from UE to eNodeB.
Figure 3 shows the flow diagram proposed in the present invention for the direction from eNodeB to UE.
Figure 4 shows the basic mechanisms of the proposed CSI reporting mode located at the UE, corresponding to the detailed block (32) in Figure 3.
Figure 5 shows the basic mechanisms of the proposed CSI reporting mode located at the eNodeB, corresponding to the detailed block (24) in Figure 2.
Figure 6 shows an example of a measured power delay profile.
Figure 7 shows the structure for obtaining the discrete wavelet coefficients contained within the type-I CSI report.
Figure 8 shows a possible arrangement for the constituent parts of the proposed type-I CSI report.
Figure 9 shows a possible arrangement for the constituent parts of the proposed type-II CSI report.
Figure 10 shows a possible multiplexing structure for the combined CSI/data payload.
Figure 11 shows the preferred embodiment for the implementation of the proposed invention.

## Detailed Description of Several Embodiments

The present invention proposes a periodic reporting of CSI in LTE-Advanced networks, which would be especially adequate in low-mobility scenarios such as indoor, hot-spots, small offices, etc. while at the same time providing accurate information for the use of advanced MIMO techniques. Such low-mobility situations can be characterized by a sufficiently low rate of variation in the measured channel conditions at the receiver. The relevant thresholds of the measured parameters for a UE to be considered in low-mobility situation depend on the actual channel conditions, as explained below.

Two mechanisms are required in order to implement the proposed reporting mode:

- One mechanism implemented at the eNodeB, by virtue of which a low-mobility situation is detected for UEs in RRC_CONNECTED state. If that is the case, the eNodeB will inform the UE to activate the proposed reporting mode and will therefore decode the compressed CSI reports sent by the UE.
- One mechanism implemented at the UE, in which compressed channel state information is sent to the eNodeB according to the proposed invention. The CSI reports proposed in the present invention are accurate enough to enable advanced MIMO techniques, while at the same time allowing for efficient compression when the UE is in a low-mobility situation.

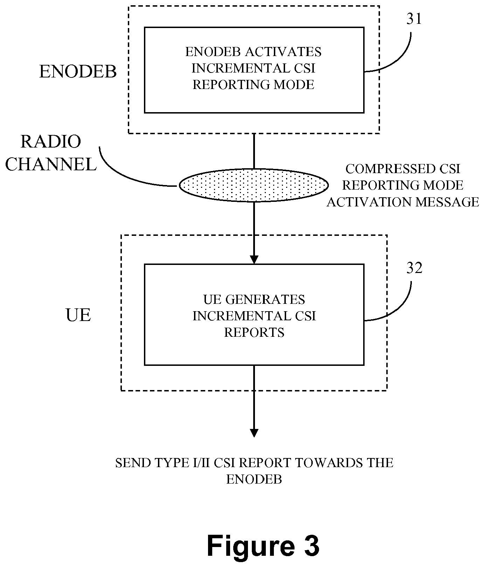

The basic flow diagram for the proposed invention comprises two figures, one for the direction from UE to eNodeB (Figure 2) and another for the direction from the eNodeB to the UE (Figure 3).

In figure 2, block (21) represents the user equipment (UE) which sends the CQI, PMI and RI values to the eNodeB (following the procedures described in [3]). These values represent: the channel quality indicator (wideband or subband) denoted as CQI; the precoding matrix indicator (in case TM 4 or TM 6 is used) denoted as PMI; and the rank indicator denoted as RI. After passing through the uplink radio channel, the eNodeB receives this information and estimates the rate of variation of the channel frequency response in block (22). This estimation may be based upon the perceived variations in COI, SRS, or any other channel-related information coming from the UEs. If the eNodeB considers that the UE is in a low-mobility situation (block 23), the new proposed CSI reporting mode is activated (block 24) and indicated to the UE by means of an appropriate control message. From there on, subsequent CSI reports received from the UE will be used for appropriate scheduling and MIMO precoding. On the contrary, if no low-mobility is detected the eNodeB employs the COI, PMI, and RI values for downlink scheduling and MIMO precoding (block 25). In the figure blocks (22) to (25) belong to the eNodeB, while block (21) corresponds to the UE.

In Figure 3, the UE (block 32) receives the compressed CSI reporting activation message sent by the eNodeB (block 31). This control message tells the UE to generate incremental CSI reports which will be sent to the eNodeB by means of the uplink data channel PUSCH. This incremental information is generated in a periodic fashion to mimic variations in the radio channel.

The periodic CSI information is sent on PUSCH rather than PUCCH, due to the advantages of CSI transmission over PUSCH that were described in section 1.2. The transmission of periodic control information in connected mode can be accomplished by means of semi-persistent scheduling (SPS), in which uplink resources are allocated only once and remain reserved for periodic and frequent transmission of small packets, thus avoiding the need for subsequent scheduling information. This scheduling mode is appropriate for services such as VoIP, video streaming or videoconference, in which very low latency is needed and dynamic scheduling would consume too many PDCCH resources. However, it is also possible to dynamically allocate uplink resources, and in this case the eNodeB is responsible for observing the timing restrictions explained below for the present invention.

The proposed incremental CSI reporting mode involves the following actions:

1. The eNodeB allocates certain uplink resources for the UE through an appropriate dynamic or semi-persistent scheduling message in PDCCH.

2. The UE estimates the downlink channel frequency responses $H_{ij}(f)$ making use of the appropriate reference signals, in the subframes where uplink resources are implicitly or explicitly reserved. These subframes may be denoted as "TX occasions".

3. Every K1 TX occasions the UE sends an accurate explicit CSI report including the instantaneous channel impulse response (CIR), as well as a global channel quality indicator (COI) related to the received SNR and the receiver characteristics. The channel impulse response is then compressed by means of a Discrete Wavelet Transform (DWT), which is especially suited for transient signals. Some of the coefficients may be discarded, in order to reduce the amount of information while keeping the desired level of accuracy. The report is then compressed using any suitable lossless compression method, and the resulting CSI report is then multiplexed with other user data on PUSCH.

4. Every K2 TX occasions (where usually K2 << K1) the UE sends only differences in the DWT coefficients and the global CQI. The differences are taken with respect to the last complete CSI report previously sent to the eNodeB. This report may be efficiently compressed by any of the usual lossless compression methods, and is also sent along with any user data on PUSCH.

The proposed scheme allows for the UE to adjust parameters K1 and K2 in order to adapt to the channel variations, so that accurate channel state information is transmitted with the minimum amount of resources. Moreover the number of discarded DWT coefficients may also be dependent on the channel characteristics.

The activation of the proposed incremental CSI reporting mode implies multiplexing of CSI and data information on PUSCH resources, so this must be taken into account by the eNodeB in order to allocate the appropriate subframes and number of RBs. However, as will be seen in following section, most of the time only limited CSI information will have to be sent in order to track the channel variations.

The proposed invention makes sense to enhance channel state description from UEs that require advanced precoding techniques (such as CoMP schemes) or multi-user MIMO, in all of which a sustained communication is understood.

In order to report as high as possible channel information, in the present invention an explicit CSI feedback is proposed. If it is denoted by N and M the number of transmit and receive antennas, respectively, the explicit CSI feedback comprises the following elements:

1. Discretized channel impulse responses for the different pairs of transmission-reception propagation paths, namely $h_{ij}(t)$, which in a Rayleigh channel model resemble several peaks representing the multipath components.

2. Wideband average CQI value of each codeword, $CQI_{avg}$ in the range [0, 15], expressing the average channel quality and also directly related to the signal to noise ratio and the receiver capabilities [3]. The number of codewords depends on the transmission mode: two CQIs for spatial multiplexing transmission modes (TM 3, 4, 8 and 9) and one CQI for the others.

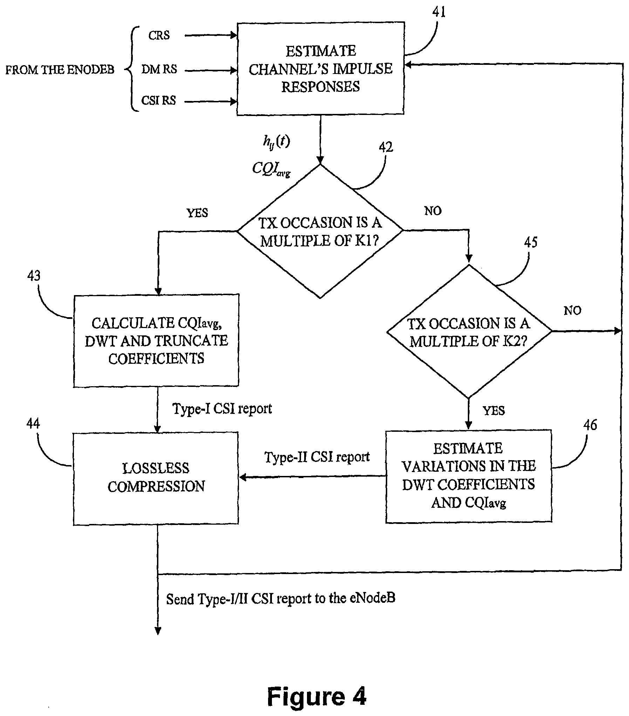

Figure 4 shows the basic mechanisms of the proposed CSI reporting mode located at the UE, which correspond to the details of block (32) in Figure 3.

Block (41) is responsible of estimating the channel frequency response, which is fundamental in the normal demodulation process and aided by the available Reference Signals: Cell Reference Signals (CRS), Demodulation Reference Signals (DM RS) and CSI Reference Signals (CSI RS). The use of ones or others depends on the actual transmission mode employed by the eNodeB. The estimation involves both the amplitude and phase of the frequency response components, namely $|H_{ij}(f)|$ and $\phi_{ij}(f)$, which in turn may be inverse-transformed to obtain the discretized instantaneous channel impulse response, $h_{ij}(t)$. Block (42) checks whether a multiple of K1 transmit occasions has elapsed, and in that case discrete wavelet transforms (DWTs) are calculated over the channel impulse responses $h_{ij}(t)$ (block 43), as well as the values of the wideband CQIs (CQIavg). Some of the resulting DWT coefficients may be discarded in order to compress the amount of information to be sent. The result will be denoted as a "Type-I CSI report".

If a multiple of K1 transmit occasions has not elapsed, block (45) checks the same condition with K2, where usually K2 << K1. Parameter K2 represents a period over which the UE sends the variations in the channel state, through the differences of the DWT coefficients and the wideband CQI (block 46), while K1 represents a repetition period for complete CSI reports. The resulting message will be denoted as "Type-II CSI report".

Finally, a lossless compression of the resulting message is applied (block 44), using any of the usual compression mechanisms such as (but not precluding others) Lempel-Ziv or similar ones (US 4,558,302). After sending this CSI report the UE keeps estimating the channel, and re-evaluating the condition in block (42) for subsequent subframes.

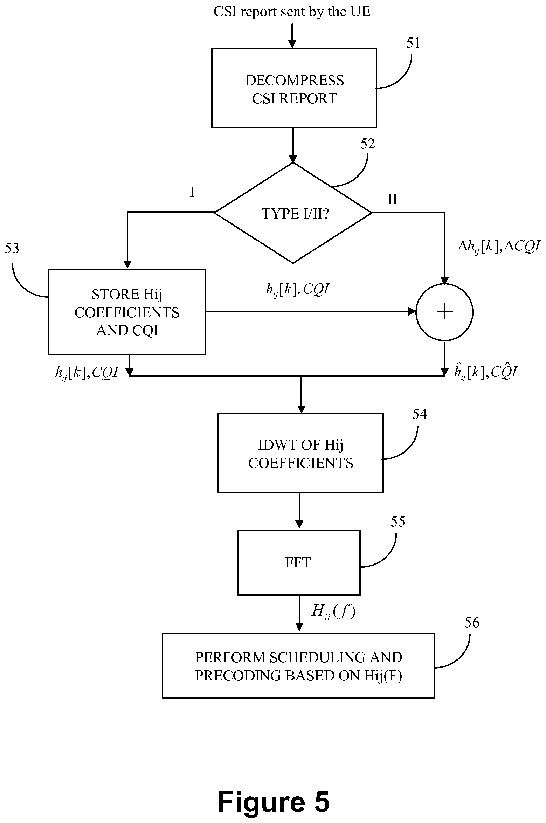

Figure 5 shows the basic mechanisms of the proposed CSI reporting mode located at the eNodeB, which corresponds to the details of block (24) in Figure 2. After receiving the CSI report sent by the UE, block (51) performs a lossless decompression. Block (52) analyses the Type of the CSI report (I or II), and different actions are taken depending on the report type. If a Type-I CSI report is received, the coefficients $h_{ij}[k]$ and the average CQI values are stored in block (53), and those coefficients previously discarded at transmission may be replaced with zeros. If a Type-II CSI report is received, the differences in the CQIs ($\Delta CQI$) and DWT coefficients ($\Delta h_{ij}[k]$) are summed together with their previously stored values, thus providing appropriate *estimations* $\hat{h}_{ij}[k]$, $\hat{CQI}$ prior to the inverse DWT. Complete reconstruction of the channel impulse response is accomplished though inverse DWT of the coefficients (block 54), and a subsequent FFT provides the desired channel frequency response $H_{ij}(f)$ (block 55). Finally block (56) executes scheduling decisions and performs precoding operations based on the obtained channel transfer functions. Both the reconstructed $H_{ij}(f)$ and the CQIs serve as inputs for advanced multi-antenna precoding techniques in which a precise downlink channel state is required.

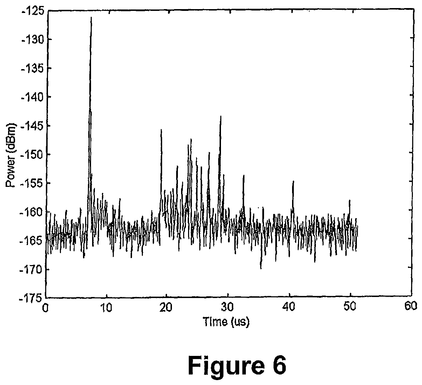

The rationale for using a discrete wavelet transform is based on the intrinsic transient nature of the impulse response. Figure 6 shows an example of a measured power delay profile (the squared modulus of the channel impulse response), where the relative peaks show significant multipath components. It is possible to compress the signal in an efficient way through a DWT, further truncating high-frequency components so as to partially remove Gaussian noise. DWT allows for a precise characterization of both time and frequency dimensions through the use of multi-resolution analysis, in contrast with Fourier-related transforms like DCT or DFT where there is always a trade-off between the time and frequency uncertainties in the reconstructed signals.

Parameters K1 and K2, the basis wavelets for the DWT and the number of discarded coefficients represent degrees of freedom for actual implementations. The UE may dynamically adjust the values of K1, K2 and the number of discarded coefficients, so as to adapt to instantaneous variations in the channel conditions, but the basis wavelets should be fixed and known a priori by the eNodeB and the UE.

It is apparent that two different reports are considered in this invention: one very detailed (and relatively infrequent) report, through DWT and subsequent lossless compression of the instantaneous channel impulse response, and one less detailed (but with a lower latency) report obtained through the differences of these coefficients. Both reports are periodically sent (with different periods), and hence the proposed invention is suited for a semi-persistent scheduling mechanism (SPS), but appropriate dynamic scheduling may also be used. CSI information must be multiplexed with other PUSCH data (if present), and in low-mobility conditions it is possible to adjust K1 and K2 so as to minimize the amount of control information.

Conditions for low-mobility:

The eNodeB is responsible for the detection of low-mobility conditions. Such situation may be that in which the following conditions are met:

- The CQI, PMI and/or RI reports sent by the UE do not change significantly over a certain period of time.
- The serving cell RSRQ is above a certain threshold, in order to avoid possible handovers to neighbour cells.
- If available, uplink SRS reports may also be checked to evaluate changes in the uplink frequency response. Although uplink and downlink channel states are independent, the movements in both the user and its surroundings may serve as an indirect indication of mobility.

In order to quantify these conditions, the following thresholds may be defined (not precluding other possibilities):

$$\frac{\Delta|H_{ij}(f)|}{|H_{ij}(f)|}, \ \frac{\Delta\Phi_{ij}(f)}{\Phi_{ij}(f)} \quad and \quad \frac{\Delta CQI}{CQI}$$

- Maximum value of the relative changes in $\frac{\Delta|H_{ij}(f)|}{|H_{ij}(f)|}$, $\frac{\Delta\Phi_{ij}(f)}{\Phi_{ij}(f)}$ and $\frac{\Delta CQI}{CQI}$ after having elapsed a number of TX occasions;
- Minimum value of the serving cell RSRQ;
- If available, maximum value or the relative changes in SRS.

The actual procedure for detecting user's mobility is out of the scope of the proposed invention. Once a low-mobility situation is detected, the eNodeB may activate the proposed incremental CSI reporting mode by means of an appropriate Radio Resource Control (RRC) control message, or a special Downlink Control Information (DCI) field in PDCCH.

The eNodeB may be aware of legacy UEs, i.e. those UEs not implementing the proposed solution, by reserving a new "CSI transmission capabilities" field in the RRC UE capability transfer procedure. If no CSI transmission capability information is received from a UE, the eNodeB may consider it as legacy and no incremental CSI report will be activated.

Structure of the proposed incremental CSI report:

For those TX occasions where a complete CSI channel report must be sent according to figure 4 (TX occasion is multiple of parameter K1), the different channel impulse responses undergo a wavelet transform and a subsequent discarding of some of the coefficients, in order to compress the amount of information. Additionally a wideband CQI value is included for each of the codewords in use (one or two). This will be denoted as "Type-I CSI report".

For those TX occasions where only incremental information is to be sent (TX occasion is a multiple of parameter K2), only the differences in the DWT coefficients and the CQI values will be transmitted. The resulting message will be denoted as "Type-II CSI report".

Structure of the Type-I CSI report:

The proposed Type-I CSI report includes the following fields:

1. A discrete wavelet transform of the different channel impulse responses for the corresponding transmission - reception paths, $h_{ij}(t)$.
2. An average CQI value for each of the codewords being received.

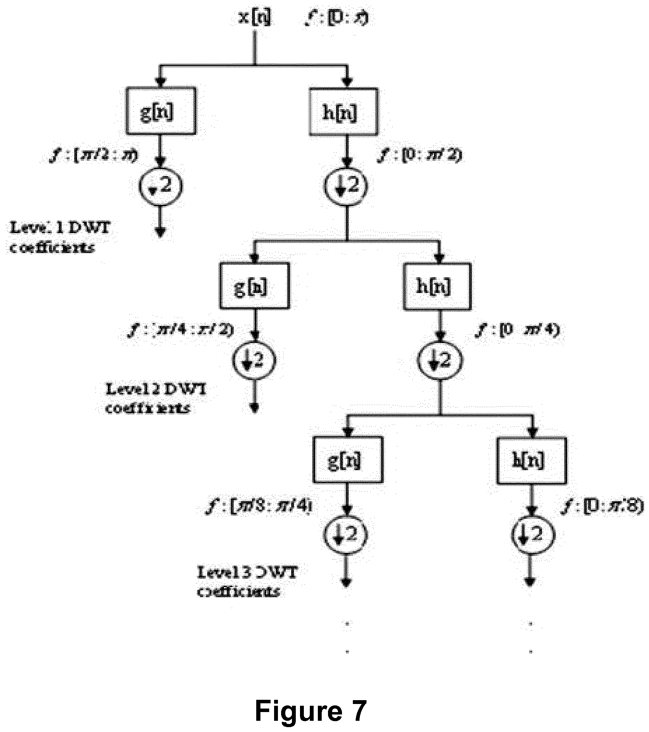

The discrete wavelet transform separates the high and low frequency components of the input signal in an iterative way, passing it through a series of filters. After each filter some of the coefficients of the DWT are obtained, and this procedure may be repeated over the number of times desired, as seen in figure 7.

Each filter operation comprises a digital convolution followed by a subsampling of two, and the combined operation can be very efficiently implemented in the following way:

$$y_{high}[k] = \sum_n x[n] \cdot g[2k - n],$$

$$y_{low}[k] = \sum_n x[n] \cdot h[2k - n],$$

where $y_{high}[k]$ and $Y_{low}[k]$ are the outputs of the highpass and lowpass filters, respectively, after subsampling by 2. The two filters are not independent and obey the following relationship:

$$g[L - 1 - n] = (-1)^n h[n],$$

where L is the number of points (equal to the number of samples of each OFDM symbol excluding the cyclic prefix [1]). The described half-band filters form an orthonormal basis. In practice it is common to use Daubechies' filters, thus giving rise to Daubechies' wavelets, but any other suitable wavelet can be used depending on the implementation.

The DWT of the original signal is then obtained by concatenating all coefficients starting from the last level of decomposition.

The reconstruction formula is:

$$x[n] = \sum_k \left( y_{high}[k] \cdot g[-n + 2k] \right) + \left( y_{low}[k] \cdot h[-n + 2k] \right).$$

For this scheme to be efficient, it is important that the signal length be a power of two (as is the case in LTE and LTE-A). Thus the number of filtering levels is the base-2 logarithm of the signal length.

This procedure offers a good time resolution at high frequencies, and good frequency resolution at low frequencies, thus achieving superior performance than DFT and DCT for transient-like signals (as is the case of the channel impulse response).

The described discrete wavelet transform shall be applied over all the required channel impulse responses, $h_{ij}(t)$ according to the MIMO transmission mode in use by the eNodeB. Some of the DWT coefficients may be discarded in order to reduce the amount of information to be sent, while at the same time retaining the most relevant information in both time and frequency. This can be done by selecting only those coefficients whose contribution to the global energy is not lower than a predefined threshold. Thus the length of the final message depends on the number of TX-RX channel paths and the number of discarded coefficients, and may be adjusted if necessary depending on the actual channel conditions (e.g. the measured channel's rms delay spread).

In addition the coefficients must be quantized to a desired number of bits, using any suitable fixed-point or floating-point format.

The complete CSI report includes also the wideband CQI value for each of the codewords, which is an integer in the range [0, 15] indicating the appropriate MCS format needed for a BLER equal to 10% (excluding retransmissions) over the whole bandwidth of interest. This can be appended at the end of the collection of DWT coefficients, at the beginning, or at any position as desired, and this may also be implementation-dependent.

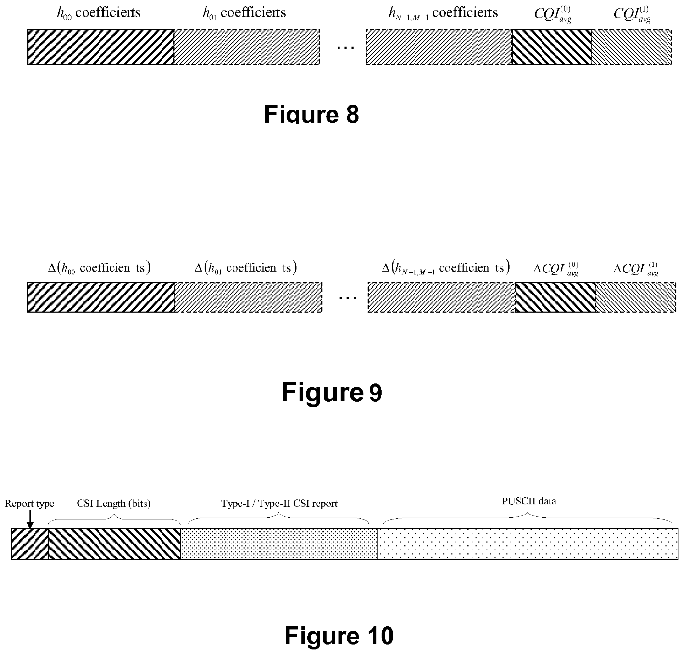

Figure 8 shows a possible arrangement for the constituent parts of the proposed Type-I CSI report. Blocks in dashed lines represent optional parts of the message, depending on the number of antennas and the transmission mode. $CQI_{avg}^{(0)}$, $CQI_{avg}^{(1)}$ stand for the average CQI values for codewords 0 and 1, respectively.

As mentioned above, any other arrangement for the data is also possible. The depicted solution has the advantage of exploiting the correlation between the receive antennas at the UE.

Structure of the Type-II CSI report:

The proposed Type-II CSI report comprises the following information:

    1. Differences in the DWT coefficients for each of the channel impulse responses $h_{ij}(t)$.
    2. Differences in the average CQI values for the codewords in use.

Regarding the DWT coefficients, this CSI report includes only the differences with respect to the last transmitted Type-I CSI report. Hence, the UE shall store the last Type-I CSI report in order to compute the differences in the coefficients and CQI values for subsequent TX occasions, until another Type-I CSI report is sent.

By appending the relevant differences in the coefficients and the average CQIs it is possible to exploit the correlations inherent to the resulting message. Figure 9 shows a possible arrangement for the proposed Type-II CSI report. Any other structure is equally valid and may be chosen by any actual implementation.

The terms $\Delta(h_{ij}$ coefficients) represent the differences in the DWT coefficients for each channel impulse response, and $\Delta CQI^{(0)}_{avg}$, $\Delta CQI^{(1)}_{avg}$ represent the differences in average CQI for the two codewords. It is apparent that in some situations not all the fields would be present, depending on the transmission mode and the number of antennas in the eNodeB and the UE.

The differences in DWT coefficients may also be quantized to a desired number of bits, which may be different than the number of bits for Type-I reports. For periods of time roughly equal to the channel coherence time, small differences are expected for the channel state information, and it may be reasonable to use fewer bits than in Type-I reports.

Lossless compression of CSI reports:

The two described CSI reports are compressed by means of a lossless algorithm prior to transmission, in order to remove redundancy and obtain a minimum-length message. As an example (but not precluding any other compression scheme), Lempel-Ziv-Welch (LZW) is an algorithm which is simple to implement and has the potential for very high throughput in hardware implementations (US 4,558,302). Other possible schemes such as Huffman codes or entropy coding are also possible.

In general these algorithms work best on data with repeated patterns, so they are especially suited for the proposed Type-II CSI report: when the channel is in a low-mobility condition, the DWT coefficients and the CQI values will presumably experiment little variation in time, therefore the differences will be small and possibly highly correlated and this will aid in the compression process.

Multiplexing of CSI reports and user data:

The proposed CSI report is designed to be periodically sent on PUSCH, thus a multiplexing scheme is needed in order to combine both CSI and user data on the same channel. This may be done e.g. by inserting a field at the beginning of the PUSCH payload identifying the length of the CSI report, followed by the relevant control and data information to be sent. Any other solution is also possible provided that it correctly informs the eNodeB about the relative positions of CSI and data inside the PUSCH payload.

Due to the additional CSI information present in PUSCH, and depending on the size of the CSI report, several situations may occur:

    a) If the size of the CSI report is large (especially in subframes carrying a Type-I CSI report), the eNodeB may temporarily allocate a higher number of RBs for that subframe. If semi-persistent scheduling was used, an appropriate dynamic scheduling message in PDCCH will take precedence over semi-persistent scheduling in that particular subframe, thus allowing for an increased amount of information [5].
    b) If the number of allocated RBs is high (as may be the case for video streaming or high-quality videoconference), there will be only a slight increase in the coding rate caused by the inclusion of the CSI report, especially in the case of Type-II CSI reports where the amount of control information is presumably low. In these cases the allocated resources may be maintained and the increased coding rate will absorb the higher data volume.
    c) If the resulting Type-I CSI report is too large to be absorbed by an increased coding rate, and if an increase in uplink resources is not advisable, the Type-I CSI report may be fragmented into several pieces, each of the fragments being separately sent over successive TX occasions. In this case it is important to carefully adjust K1 and K2 parameters so as to avoid expending a long time for the transmission of each CSI report.

In all cases, the two report types (as well as the different fragments in Type-I CSI reports, if applicable) must be distinguished from each other by means of some control information. The UE may reserve one bit prior to the length field at the beginning of the PUSCH payload, identifying the type of the CSI report (e.g. "0" for Type-I and "1" for Type-II, but any other possibility is also valid).

Figure 10 shows a possible multiplexing structure for the combined CSI/data payload. A first bit called "Report type" distinguishes between the two CSI report types. Then a "CSI Length" field specifies the size (in bits or bytes) of the CSI report. Then the appropriate Type-I or Type-II CSI report is appended, and finally PUSCH data occupy the last (and larger) part of the payload.

In case there exists fragmentation of the Type-I report, the "Report type" field may actually be more than one bit wide in order to indicate the fragment number if applicable.

As stated before, any other multiplexing scheme may be used provided it correctly informs about the relative locations of CSI and data as well as the actual CSI report type.

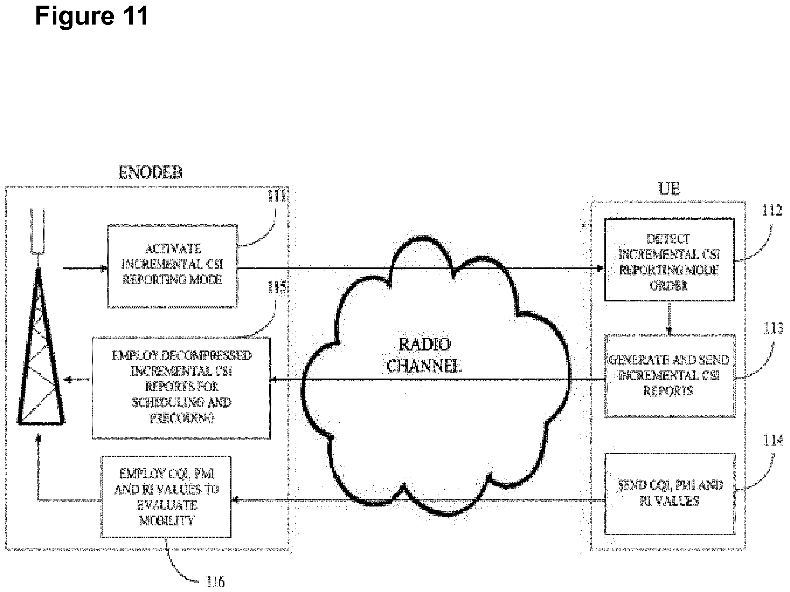

Figure 11 shows a preferred embodiment for implementation of the proposed invention. The proposed embodiment comprises a set of blocks over both the eNodeB and the UE, which are separated by the radio channel.

Block (111) located at the eNodeB activates the proposed incremental CSI reporting mode. The activation relies on the mobility estimation performed by block (116), which in turn is based upon the CQI, PMI and RI values generated at the UE (block 114) and transmitted to the eNodeB. Block (112) in the UE detects the incremental CSI reporting order from the eNodeB and generates incremental CSI reports (block 113), which are transmitted to the eNodeB. These reports are received by the eNodeB (block 115), which decompresses the incremental CSI reports and performs advanced scheduling and precoding operations. When an incremental CSI reporting order is received, block (114) stops generating the CQI, PMI and RI values as they are no longer needed.

The blocks depicted may be implemented as a collection of software elements, hardware elements, firmware elements, or any combination of them.

Advantages of the Invention:

The described invention proposes a way to accurately transmit CSI reports in LTE-Advanced employing the uplink shared data channel (PUSCH), partially alleviating the coverage issues suffered by PUCCH by dedicating it exclusively for the transmission of Scheduling Requests and HARQ ACK/NACK. Advanced multi-antenna and interference cancellation techniques, such as MU-MIMO and CoMP, require accurate explicit CSI rather than implicit feedback in order to achieve high spectral efficiencies. At the same time, it is also advisable to adapt to channel variations so as to optimize the amount of control information. The proposed CSI scheme comprises two different formats to take both considerations into account: a first CSI report type containing detailed CSI information in the form of discrete wavelet transforms of the channel impulse responses, and a second CSI report type carrying only differences in the DWT coefficients and the CQI values.

The fact that CSI reports are taken out from PUCCH is beneficial because the number of PUCCH regions is limited, and control signalling from multiple UEs must be multiplexed using orthogonal code-division multiplexing which reduces the probability of correct detection. Semi-persistent scheduling in LTE provides a suitable means for periodically scheduling resources without incurring in excessive overhead, but also dynamic scheduling is capable of providing adequate periodicity for the quality reports.

The proposed incremental CSI reporting mode may increase user throughput by using advanced scheduling techniques, and may also extend cell coverage by applying more efficient precoding techniques. Moreover, the user's throughput is also increased as each user may receive the desired signal with better conditions. An increased coverage zone implies a reduction on the number of eNodeBs and a reduction in the number of handovers and reselections, which in turn results in a significant reduction in network signalling.

ACRONYMS

3GPP Third Generation Partnership Project
BLER Block Error Rate
CDM Code Division Multiplexing
CIR Channel Impulse Response
CoMP Coordinated Multi-Point Transmission
CRS Cell Reference Signal
CSI Channel State Information
CQI Channel Quality Indicator

DCT Discrete Cosine Transform
DFT Discrete Fourier Transform
DM Differential Modulation
DWT Discrete Wavelet Transform
FSS Frequency Selective Scheduling
GSM Global System for Mobile Communications
HARQ Hybrid Automatic Repeat and Request
IMT International Mobile Telecommunications
ISI Inter-Symbol Interference
LTE Long-Term Evolution
LTE-A Long-Term Evolution -Advanced
LZW Lempel-Ziv-Welch
MCS Modulation and Coding Scheme
MIMO Multiple Input Multiple Output
MU-MIMO Multi-User MIMO
OFDMA Orthogonal Frequency Division Multiple Access
OPEX Operational Expenditure
PAPR Peak to Average Power Ratio
PDCCH Physical Downlink Control Channel
PMI Precoding Matrix Indicator
PUCCH Physical Uplink Control Channel
PUSCH Physical Uplink Shared Channel
RB Resource Block
RI Rank Indicator
RRC Radio Resource Control
RRM Radio Resource Management
RSRQ Reference Signal Received Quality
SC-FDMA Single-Carrier Frequency Division Multiple Access
SNR Signal to Noise Ratio
SPS Semi-Persistent Scheduling
SR Scheduling Request
SRS Sounding Reference Signal
TM Transmission Mode
UE User Equipment
UMTS Universal Mobile Telecommunication System
VoIP Voice over IP

REFERENCES

[1] 3GPP TS 36.211, Evolved Universal Terrestrial Radio Access (E-UTRA); Physical channels and modulation (Release 10)

[2] S. Sesia, I. Toufik, M. Baker (editors), "LTE, the UMTS Long Term Evolution: From Theory to Practice", John Wiley & Sons, 2009

[3] 3GPP TS 36.213, Evolved Universal Terrestrial Radio Access (E-UTRA); Physical Layer Procedures (Release 10)

[4] Nokia, "R1-081461: Coverage Comparison between PUSCH, PUCCH and PRACH", www.3gpp.org, 3GPP TSG RAN WG1, meeting 52bis, Shenzhen, China, April 2008

[5] E. Dahlman, S. Parkval, J. Sköld, "4G LTE/LTE-Advanced for Mobile Broadband", Academic Press, 2011

[6] 'Principles of CQI report' 3GPP draft, R2-0601021, 3rd Generation Partnership Project. Mobile Competence Centre.

[7] Sharp: 'Consideration on CQI reporting', 3GPP draft, R1-072054, 3rd Generation Partnership Project, Mobile Competence Centre.

[8] Texas Instruments: 'On proposed enhancements to periodic CSI reporting' draft, R1-113241, 3$^{rd}$ Generation Partnership Project, Mobile Competence centre.

[9] 'DCT Partitioning for CQI Reporting', 3GPP TSG-RAN WG1, Meeting #48, 12-16 January 2007, St Louis, U.S.A., R1-070933.

## Claims

1. A method for channel state information, CSI, reporting in LTE-Advanced networks, comprising a user equipment, UE, transmitting to a LTE cellular base station, eNodeB, a CSI report containing quality information including CQI, PMI and RI indicators (21), on an uplink radio channel in a periodic manner using a physical uplink shared channel, PUSCH, wherein the method is **characterised in that** it comprises activating (24) based on a low mobility estimation of said UE (23) an incremental CSI reporting, said low mobility estimation being performed by said eNodeB, and **in that** said incremental CSI reporting comprises:

    - a first CSI report type containing detailed CSI information in the form of discrete wavelet transform or DWT of the channel impulse responses as well as average CQI indications for the codewords in use, some of the DWT coefficients being admissible to be discarded for increased compression; and
    - a second CSI report type containing differences in coefficients of said DWT for each of said channel impulse responses, and differences in the average of said CQI values.

2. A method according to claim 1, wherein said eNodeB evaluates said CQI, PMI and RI indicators of said UE for evaluating a rate variation of a channel frequency response in order to perform said low mobility estimation.

3. A method according to claim 2, comprising activating said incremental CSI reporting when said rate variation of said channel frequency response is below a threshold.

4. A method according to claim 3, wherein said incremental CSI reporting is activated by means of a RRC control message or a special DCI field in a PDCCH.

5. A method according to claim 4, wherein said UE when said incremental CSI reporting is activated, comprises generating and transmitting incremental compressed of said CSI reports to said eNodeB.

6. A method according to claim 5, wherein said eNodeB when said incremental CSI reporting is activated, further comprises decompressing said compressed CSI reports being transmitted from said UE and performing advanced scheduling and MIMO precoding operations.

7. A method according to claim 2, wherein if said rate variation of said channel frequency response is above said threshold said eNodeB uses said CQI, PMI, and RI indicators for performing a downlink scheduling and said MIMO precoding operations.

8. A method according to claim 1, wherein a physical uplink control channel, PUCCH, is used for the transmission of control information, such as HARQ ACK/NACK and scheduling requests.

9. A method according to claim 1, wherein said first and second CSI reports are compressed by means of a lossless algorithm prior to transmission in order to remove redundancy and obtain a minimum-length message.

10. A method according to claim 9, wherein said first and second CSI reports are sent periodically in different periods.

11. A method according to claim 1, comprising a multiplexing of CSI and data information on said PUSCH channel.

12. A system for channel state information, CSI, reporting in LTE-Advanced networks, comprising a user equipment, UE, being configured to transmit to a LTE cellular base station, eNodeB, a CSI report containing quality information including CQI, PMI and RI indicators (21) on an uplink radio channel in a periodic manner using a physical uplink shared channel, PUSCH, wherein the system is **characterised in that** said eNodeB is configured to estimate a low-mobility of said UE (23) and to activate incremental CSI reporting based on said estimated low-mobility (24), said incremental CSI reporting comprising:

- a first CSI report type containing detailed CSI information in the form of discrete wavelet transform or DWT of the channel impulse responses as well as average CQI indications for the codewords in use, some of the DWT coefficients being admissible to be discarded for increased compression; and
- a second CSI report type containing differences in coefficients of said DWT for each of said channel impulse responses, and differences in the average of said CQI values..

**Patentansprüche**

1. Verfahren zur Kanalzustandsinformation, CSI, -Berichterstattung in LTE-Advanced-Netzwerken, eine Benutzervorrichtung, UE, umfassend, die an eine LTE-Zellularbasisstation, eNodeB, eine CSI-Berichterstattung überträgt, die Qualitätsinformationen, einschließlich CQI-, PMI- und RI-Indikatoren (21), auf einem Uplink-Funkkanal in periodischer Weise unter Verwendung eines Physical Uplink Shared Channels, PUSCH, enthält, wobei das Verfahren **dadurch gekennzeichnet ist, dass** es das Aktivieren (24), das auf einer geringen Einschätzung der Mobilität der UE (23) basiert, einer inkrementellen CSI-Berichterstattung umfasst, wobei die geringe Einschätzung der Mobilität durch die eNodeB durchgeführt wird, und dadurch dass die inkrementelle CSI-Berichterstattung Folgendes umfasst:

- eine erste CSI-Berichtsart, die detaillierte CSI-Informationen in Form von diskreter Wavelet-Transformation oder DWT der Kanalimpulsantworten sowie durchschnittliche CQI-Indikationen für die Codewörter, die in Gebrauch sind, enthält, wobei einige der DWT-Koeffizienten dafür zulässig sind, wegen erhöhter Kompression verworfen zu werden; und
- eine zweite CSI-Berichtsart, die Unterschiede in Koeffizienten der DWT für jede der Kanalimpulsantworten und Unterschiede in dem Durchschnitt der CQI-Werte erhält.

2. Verfahren nach Anspruch 1 wobei die eNodeB die CQI-, PMI- und RL-Indikatoren der UE zum Bewerten einer Änderungsrate einer Kanalfrequenzantwort bewertet, um die Schätzung der durchzuführenden geringen Mobilität durchzuführen.

3. Verfahren nach Anspruch 2, welches das Aktivieren der inkrementellen CSI-Berichterstattung umfasst, wenn die Änderungsrate der Kanalfrequenzantwort unter einem Schwellenwert liegt.

4. Verfahren nach Anspruch 3, wobei die inkrementelle CSI-Berichterstattung durch eine RRC-Steuernachricht oder ein spezielles DC-Feld in einem PDCCH aktiviert wird.

5. Verfahren nach Anspruch 4, wobei die UE, wenn die inkrementelle CSI-Berichterstattung aktiviert ist, das Erzeugen und Übertragen inkrementell komprimiert der CSI-Berichte an die eNodeB umfasst.

6. Verfahren nach Anspruch 5, wobei die eNodeB, wenn die inkrementelle CSI-Berichterstattung aktiviert ist, ferner das Dekomprimieren der komprimierten CSI-Berichte, die aus der UE übertragen werden, und das Durchführen erweiterten Schedulings und von MIMO-Vorcodierungsoperationen umfasst.

7. Verfahren nach Anspruch 2, wobei, wenn die Änderungsrate der Kanalfrequenzantwort oberhalb der Schwelle ist, die eNodeB die CQI-, PMI- und RI-Indikatoren zum Durchführen eines Downlink-Schedulings und der MIMO-Vorcodierungsoperationen verwendet.

8. Verfahren nach Anspruch 1, wobei ein Physical Uplink Control Channel, PUCCH, zur Übertragung von Steuerinformationen, wie HARQ ACK/NACK, und Scheduling-Anforderungen, verwendet wird.

9. Verfahren nach Anspruch 1, wobei der erste und zweite CSI-Bericht durch Mittel eines verlustfreien Algorithmus vor der Übertragung komprimiert werden, um Redundanz zu entfernen und eine Nachricht mit Mindestlänge zu erhalten.

10. Verfahren nach Anspruch 9, wobei der erste und zweite CSI-Bericht periodisch in unterschiedlichen Perioden gesendet werden.

**11.** Verfahren nach Anspruch 1, welches ein Multiplexverfahren von CSI- und Dateninformationen auf dem PUSCH-Kanal umfasst.

**12.** System zur Kanalzustandsinformation, CSI, -Berichterstattung in LTE-Advanced-Netzwerken, das eine Benutzervorrichtung, UE, umfasst, die dazu konfiguriert ist, an eine LTE-Zellularbasisstation, eNodeB, eine CSI-Berichterstattung, die Qualitätsinformationen, einschließlich CQI-, PMI- und RI-Indikatoren (21), auf einem Uplink-Funkkanal in periodischer Weise unter Verwendung eines Physical Uplink Shared Channel, PUSCH, enthält, wobei das System **dadurch gekennzeichnet ist, dass** die eNodeB dazu konfiguriert ist, eine geringe Mobilität der UE (23) zu schätzen und inkrementelle CSI-Berichterstattung, die auf der geschätzten geringen Mobilität (24) basiert, zu aktivieren, wobei die inkrementelle CSI-Berichterstattung Folgendes umfasst:

- eine erste CSI-Berichtsart, die detaillierte CSI-Informationen in Form von diskreter Wavelet-Transformation oder DWT der Kanalimpulsantworten sowie durchschnittliche CQI-Indikationen für die Codewörter, die in Gebrauch sind, enthält, wobei einige der DWT-Koeffizienten dafür zulässig sind, wegen erhöhter Kompression verworfen zu werden; und
- eine zweite CSI-Berichtsart, die Unterschiede in Koeffizienten der DWT für jede der Kanalimpulsantworten und Unterschiede in dem Durchschnitt der CQI-Werte erhält.

**Revendications**

**1.** Procédé pour le signalement d'information de l'état de canal, CSI, dans les réseaux de technologie d'évolution à long terme, LTE, avancée, comprenant un équipement d'utilisateur, UE, transmettant à une station de base cellulaire LTE, eNodeB, un signalement de CSI contenant des informations sur la qualité comportant des indicateurs de qualité de canal, CQI, de matrice de précodage, PMI, et de rang, RI, (21), sur un canal radio en liaison ascendante de manière périodique en utilisant un canal physique partagé en liaison ascendante, PUSCH, dans lequel le procédé est **caractérisé en ce qu'**il comprend l'activation (24) basée sur une estimation de la mobilité faible dudit UE d'un signalement de CSI croissant, ladite estimation de mobilité faible étant réalisée par ledit eNodeB, et **en ce que** ledit signalement de CSI croissant comprend :

- un premier type de signalement de CSI contenant des informations détaillées de CSI sous la forme d'une transformée d'ondelette discrète ou DWT des réponses impulsionnelles de canal ainsi que des indications de la moyenne de CQI pour les mots de passe utilisés, quelques-uns des coefficients de DWT pouvant être abandonnés pour une compression accrue ; et
- un deuxième type de signalement de CSI contenant des différences dans les coefficients de ladite DWT pour chacune desdites réponses impulsionnelles de canal, et des différences dans la moyenne desdites valeurs CQI.

**2.** Procédé selon la revendication 1, dans lequel ledit eNodeB évalue lesdits indicateurs CQI, PMI et RI dudit UE pour évaluer une variation de taux d'une réponse de fréquence de canal afin de réaliser ladite estimation de mobilité faible.

**3.** Procédé selon la revendication 2, comprenant l'activation dudit signalement de CSI croissant lorsque ladite variation de taux de ladite réponse de fréquence de canal est en dessous d'un seuil.

**4.** Procédé selon la revendication 3, dans lequel ledit signalement de CSI croissant est activé au moyen d'un message de contrôle de RRC ou un domaine spécial DCI dans un PDCCH.

**5.** Procédé selon la revendication 4, dans lequel ledit UE lorsque ledit signalement de CSI croissant est activé, comprend la génération et la transmission d'un comprimé croissant desdits signalements de CSI audit eNodeB.

**6.** Procédé selon la revendication 5, dans lequel ledit eNodeB lorsque ledit signalement de CSI croissant est activé, comprend en outre la décompression desdits signalements de CSI comprimés étant transmis depuis ledit UE et la réalisation d'une programmation avancée et d'opérations de précodage MIMO.

**7.** Procédé selon la revendication 2, dans lequel si ladite variation de taux de ladite réponse de fréquence de canal est au-dessus dudit seuil ledit eNodeB utilise lesdits indicateurs CQI, PMI, et RI pour la réalisation d'une programmation en liaison descendante et lesdites opérations de précodage MIMO.

**8.** Procédé selon la revendication 1, dans lequel un canal de contrôle physique sur la liaison ascendante, PUCCH, est utilisé pour la transmission d'informations de contrôle, telles que HARQ ACK/NACK et demandes de programmation.

9. Procédé selon la revendication 1, dans lequel lesdits premier et deuxième signalements de CSI sont comprimés au moyen d'un algorithme sans perte avant la transmission afin d'éliminer la redondance et d'obtenir un message de longueur minimale.

10. Procédé selon la revendication 9, dans lequel lesdits premier et deuxième signalements de CSI sont envoyés périodiquement à différentes périodes.

11. Procédé selon la revendication 1, comprenant un multiplexage de CSI et d'informations de données sur ledit canal PUSCH.

12. Système pour le signalement d'information de l'état de canal, CSI, dans les réseaux de technologie d'évolution à long terme, LTE, avancée, comprenant un équipement d'utilisateur, UE, étant configuré pour transmettre à une station de base cellulaire LTE, eNodeB, un signalement de CSI contenant des informations sur la qualité comportant des indicateurs de qualité de canal, CQI, PMI et RI (21) sur un canal radio en liaison ascendante de manière périodique en utilisant un canal physique partagé en liaison ascendante, PUSCH, dans lequel le système est **caractérisé en ce que** ledit eNodeB est configuré pour estimer une faible mobilité dudit UE (23) et pour activer le signalement de CSI croissant basés sur ladite faible mobilité estimée (24), ledit signalement de CSI croissant comprenant :

- un premier type de signalement de CSI contenant des informations détaillées de CSI sous la forme d'une transformée d'ondelette discrète ou DWT des réponses impulsionnelles de canal ainsi que des indications de la moyenne de CQI pour les mots de passe utilisés, quelques-uns des coefficients de DWT pouvant être abandonnés pour une compression accrue ; et
- un deuxième type de signalement de CSI contenant des différences dans les coefficients de ladite DWT pour chacune desdites réponses impulsionnelles de canal, et des différences dans la moyenne desdites valeurs CQI.

APERIODIC/PERIODIC UPLINK CHANNEL
STATE INFORMATION (CSI)

```
┌──────────────────┐            CQI      ┌──────────────────┐
│                  │◄┄┄┄┄┄┄┄┄┄┄┄┄┄┄┄┄┄   │                  │
│                  │            PMI      │                  │
│    E-NODE B      │◄┄┄┄┄┄┄┄┄┄┄┄┄┄┄┄┄    │  USER EQUIPMENT  │
│                  │            RI       │                  │
│                  │◄┄┄┄┄┄┄┄┄┄┄┄┄┄┄┄┄    │                  │
└──────────────────┘                     └──────────────────┘
```

# Figure 1

UE — USER EQUIPMENT SENDS CQI, PMI, RI — 21

RADIO CHANNEL

CQI  PMI  RI

ENODEB — 22

E-NODE B ESTIMATES UE'S FREQUENCY RESPONSE VARIATION RATE

UE IS IN LOW-MOBILITY CONDITIONS? — 23

NO

YES — 24

PERFORM DL SCHEDULING AND PRECODING BASED ON CQI, PMI AND RI — 25

ACTIVATE INCREMENTAL CSI REPORTING MODE AND PERFORM DL SCHEDULING AND PRECODING BASED ON INCREMENTAL CSI REPORTS RECEIVED FROM THE UE

# Figure 2

ENODEB

ENODEB ACTIVATES
INCREMENTAL CSI
REPORTING MODE

31

RADIO
CHANNEL

COMPRESSED CSI
REPORTING MODE
ACTIVATION MESSAGE

UE

UE GENERATES
INCREMENTAL CSI
REPORTS

32

SEND TYPE I/II CSI REPORT TOWARDS THE
ENODEB

# Figure 3

CRS

DM RS    FROM THE ENODEB

CSI RS

41

ESTIMATE CHANNEL'S IMPULSE RESPONSES

$h_{ij}(t)$

$CQI_{avg}$

42

TX OCCASION IS A MULTIPLE OF K1?

YES

NO

43

CALCULATE CQIavg, DWT AND TRUNCATE COEFFICIENTS

45

TX OCCASION IS A MULTIPLE OF K2?

NO

Type-I CSI report

YES

44

LOSSLESS COMPRESSION

Type-II CSI report

46

ESTIMATE VARIATIONS IN THE DWT COEFFICIENTS AND CQIavg

Send Type-I/II CSI report to the eNodeB

**Figure 4**

CSI report sent by the UE

DECOMPRESS
CSI REPORT
51

TYPE I/II?
52

I

II

$\Delta h_{ij}[k], \Delta CQI$

STORE Hij
COEFFICIENTS
AND CQI
53

$h_{ij}[k], CQI$

$+$

$h_{ij}[k], CQI$

$\hat{h}_{ij}[k], C\hat{Q}I$

IDWT OF Hij
COEFFICIENTS
54

FFT
55

$H_{ij}(f)$

PERFORM SCHEDULING AND
PRECODING BASED ON Hij(F)
56

## Figure 5

**Figure 6**

**Figure 7**

$h_{00}$ coefficients     $h_{01}$ coefficients          $h_{N-1,M-1}$ coefficients     $CQI_{avg}^{(0)}$     $CQI_{avg}^{(1)}$

...

## Figure 8

$\Delta(h_{00}$ coefficien ts$)$     $\Delta(h_{01}$ coefficien ts$)$          $\Delta(h_{N-1,M-1}$ coefficien ts$)$     $\Delta CQI_{avg}^{(0)}$     $\Delta CQI_{avg}^{(1)}$

...

## Figure 9

Report type     CSI Length (bits)          Type-I / Type-II CSI report          PUSCH data

## Figure 10

# Figure 11

EP 2 850 763 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090274220 A
- US 20100008431 A
- GB 2475098 A
- US 20080207135 A
- US 2011034171 A1
- US 4558302 A

### Non-patent literature cited in the description

- LTE, the UMTS Long Term Evolution: From Theory to Practice. John Wiley & Sons, 2009
- **NOKIA.** R1-081461: Coverage Comparison between PUSCH, PUCCH and PRACH. *3GPP TSG RAN WG1,* April 2008, www.3gpp.org
- 4G LTE/LTE-Advanced for Mobile Broadband. **E. DAHLMAN ; S. PARKVAL.** J. Sköld. Academic Press, 2011
- DCT Partitioning for CQI Reporting. 3GPP TSG-RAN WG1. 12 January 2007